Europäisches Patentamt

(19) European Patent Office  (11) Publication number: **0 173 695**

Office européen des brevets  **B1**

(12) **EUROPEAN PATENT SPECIFICATION**

(45) Date of publication of patent specification: **17.08.88**  (51) Int. Cl.⁴: **F 15 B 13/043**

(21) Application number: **85900828.6**

(22) Date of filing: **06.02.85**

(86) International application number:
**PCT/SE85/00057**

(87) International publication number:
**WO 85/03556 15.08.85 Gazette 85/18**

(54) **A PNEUMATIC SERVO VALVE (GOVERNING VALVE).**

(30) Priority: **09.02.84 SE 8400676**

(43) Date of publication of application:
**12.03.86 Bulletin 86/11**

(45) Publication of the grant of the patent:
**17.08.88 Bulletin 88/33**

(84) Designated Contracting States:
**DE GB SE**

(56) References cited:
**GB-A-1 391 648**
**SE-B-77 095 529**
**US-A-1 851 816**
**US-A-2 270 059**
**US-A-2 363 111**
**US-A-3 139 109**

(73) Proprietor: **ASPERVALL INSTRUMENT AB**
**Box 57**
**S-661 00 Säffle (SE)**

(73) Proprietor: **COMPUTER INSTRUMENT AB**
**Box 57**
**S-661 00 Säffle (SE)**

(72) Inventor: **ASPERVALL, Roland**
**Stockvägen 38**
**S-661 00 Säffle (SE)**
Inventor: **JAREKE, Bo**
**Vallgatan 31**
**S-661 00 Säffle (SE)**

(74) Representative: **MacFie, W.R. et al**
**Albihn West AB Stora Nygatan 15**
**S-411 08 Göteborg (SE)**

Courier Press, Leamington Spa, England.

## Description

Shifting means e.g. servo motors, are often used for manipulation of heavy devices within the industry and other technical fields, such as heating plants, water treatment plants lifting equipment and so on. The manipulation work is affected by means of a pressure fluid, or pressure gas, which acts e.g. on a piston axially slidable within a cylinder, or on a rotatably mounted wing.

The governing of the pressure medium to and from the cylinder is affected by means of a governing valve or, as it is often called a pilot valve, or servo valve. In lifting or excavating machines for instance the controlling motion of such valves is made manually, but may alternatively also be governed by a signal impulse to an internal servo system within the valve, so to say servo on servo.

The most common type of servo valve is the well known, so called sliding piston, comprising a cylinder with radial ports and corresponding piston portions arranged axially on a common shaft. Such a valve is for instance shown in US-A-2363111 which, however, is intended for hydraulic fluid.

This sliding piston will require comparatively large impulse energy for its movement, in spite of its often small diameter (5-10 mm). The axial movement for the opening and closing of the ports tends to be long, because the pistons need a certain overlap to ensure acceptable sealing.

It is an object of the present invention to eliminate the above mentioned problems. The demand for better servo valves has increased through the present computerisation of industrial processes, and pneumatically operated valves offer certain advantages.

The invention relates to a pneumatic servo valve operable by means of electric signals to distribute compressed air to or from a double acting servo motor and comprising a body defining a cylinder chamber with coaxial bores at each end of said chamber; a piston slidably arranged in the cylinder chamber and provided with projecting portions which are rigidly connected to and axially project from each side of the piston and slide in the respective bores; an axially extending channel through the piston and the projecting portions; a circumferential groove in said piston; a radially extending bore connecting said channel and said groove; an inlet port open to said groove for introducing the compressed air into the servo valve; and outlet channels for connection with said servo motor. The invention is characterized in that the distribution of compressed air to or from the servo motor is controlled by two spring biased double seat valves having cone-like sealing surfaces at each end facing in the same direction, said double seat valves being coaxial with said projecting portions and so arranged that in the normal position of the servo valve the inner sealing surfaces thereof close respective ends of said channel and the outer sealing surfaces are urged against bleed seats which are axially adjustable for adjustment of the piston in a central position wherein the four sealing surfaces of said seat valves are in engagement with their respective seats; whereby during operation of said servo valve any movement of the piston out of the normal position results in a connection of one of the outlet channels with the inlet port and in a connection of the other outlet channel with a bleed port.

An axial displacement of the piston from its central position, caused by different air pressures on opposite sides will remove one of the piston projections from the adjacent double seat valve, thereby opening the piston channel, allowing air pressure to flow to one side of the servo motor while the other double seat valve will be lifted from its bleed seat, so that the other side of the servo motor is decompressed simultaneously with the servo motor piston moving in one direction, and that a displacement of the piston and its projections in the opposite dierection will influence the servo motor piston to move in the above described way in the opposite direction.

The cylinder is advantageously so short in relation to the piston, that the piston cannot move further axially than is necessary for full opening of the valves.

Small conduits are preferably drilled from each end of the piston towards the circumferential groove in order to deliver compressed air to both ends of the cylinder.

Channels in the valve body advantageously lead from each end of the cylinder to two parallel decompression nozzles, which are closed by spring biased flappers, whereby the pressure on both sides of the piston can be controlled by means of an electromagnet designed for receiving electric signals from a microcomputer.

The invention will now be described with reference to the accompanying drawings, in which

Figure 1 shows a servo valve according to the invention, which is connected to a schematically depicted control system,

Figure 2 is an end view of the servo valve,

Figure 3 shows the servo valve in one end position, and

Figure 4 shows an alternative arrangement of the double seat valves.

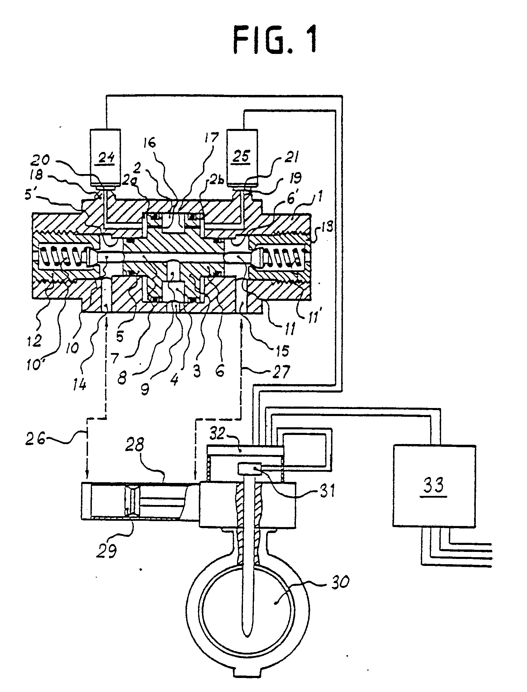

The servo valve in Figure 1 comprises a body 1 containing a cylinder 2, enclosing an axially slidable piston 3, which on its middle is provided with a circumferential groove 4. The piston has on each of its ends coaxial, outwardly directed projections 5 and 6, which constitute a piston shaft, and are shown in the figure as being integral with the piston 3. The projections can slide in bores 5' and 6' which are coaxial with the cylinder 2. Small annular chambers 2a and 2b, respectively, are thereby formed on each side of the piston 3. A coaxial channel 7 extends through the piston 3 and the projections 5 and 6, and is, via a transverse bore, connected with the annular groove 4, to which compressed air can be distributed through an inlet port 9 in the cylinder wall. Further the servo valve comprises two double seat valves 10 and 11, coaxially located in line with the piston shaft and outside the same.

Each valve is provided with two conical valve bodies facing in the same direction. The valves are located so one of the cones seals against the ends of channel 7, while the other of the cones seals against a bleed seat 12 or 13, which are included in the device. The bleed seats are axially adjustable. Springs 10', ll' according to Figure 1, or only one spring 34 according to Figure 4, act against the valves.

By axial adjustment of the bleed seats, the valves can keep the piston shaft, and with it the piston 3, in a middle position, when it is not biased by air pressure from its position. In this position all four valve cones seal against their respective seats.

Channels 14 and 15 lead from the cavities formed around the shafts of the double seat valves, between the ends of the piston projections and the decompression seats. These channels can be connected to a shifting means, e.g. a servo motor 28.

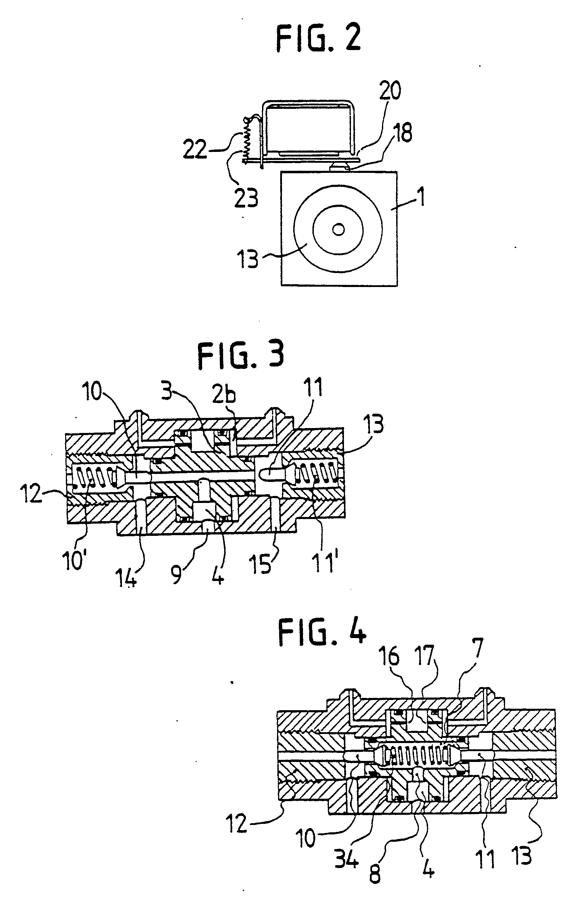

Two very small channels, or restricting conduits 16 and 17 are drilled through the piston in order to enable a restricted flow of air from the circumferential groove 4 in the piston 3 to the annular chambers 2a and 2b. Further channels lead from the annular chambers to decompression nozzles 18 and 19, which are closed by means of flappers 20 and 21, being biased by springs 22 and 23 (see Figure 2). Two electromagnets 24 and 25 are arranged to open the flappers.

Principle of operation:

Compressed air passes into the circular groove via the port 9. The air pressure also acts in the channel 7, and the annular chambers 2a and 2b are filled through the conduits 16 and 17 together with the channels to the decompression nozzles 18 and 19, which are sealed by the flappers 20 and 21. The system is now in balance with all valve seats, and both nozzles closed. The consumption of air is now equal to zero. From the figures and the description it will be clear that any small movement of the piston 3 to the right, or the left will influence both double seat valves.

Let us assume that the servo valve, via pipes 26 and 27, is connected to a shifting cylinder 28 with a driven piston 29. We also assume that the shifting cylinder is arranged to turn a throttle valve 30, the shaft of which carries an angle position indicator 31.

A microcomputer 32 and a central computer 33 are also included in the system. Assume that the central computer has received a signal, that the flow through the valve 30 is not correct. A fault signal goes to the microcomputer 32, which has a permanent signal from the position indicator 31 (actual value). The microcomputer compares this signal with the signal from the central computer (correct value), and calculates how much the valve 30 ought to be adjusted, and sends a signal to one of the electromagnets on account of this calculation. Assume that the magnet 24 gets electric current. The flapper 20 will then be lifted from the nozzle 18, and the pressure in the chamber 2a will drop because the opening area of the nozzle is several times larger than the area of the conduit 16. The pressure in the chamber 2b will then press the piston 3 to the left. The piston projection 6 will then move away from the valve 11, and the projection 5 will force the valve 10 to the left, causing pressure to be bled off. Compressed air now flows through the channel 15, and the pipe 27 to the shifting cylinder 28, in which the piston 29 moves to the left, while air from the left side of the cylinder 28 escapes through the pipe 26, channel 14 and out past the bleed off seat 12, which is opened to the atmosphere by the valve 10. See Figure 3. When the microcomputer registers a correct angular value, it will interrupt the signal to the electromagnet 24, the flapper seals the nozzle 18, the pressure in the annular chamber 2a rises to equal the pressure in the chamber 2b, bringing the piston 3 back to its middle position. The piston 29 will also be stopped. If the magnet 25 receives an electric current a corresponding shifting of the valve 30 will be effectuated in the opposite direction.

The flapper-principle means that it is possible with small forces, often a few grammes, and very small movements, a few hundreds of a millimetre, to obtain large changes in pressure. The two independent flapper nozzle systems 16, 18, 20 and 17, 19, 21, respectively, together with the piston 3 works in the device according to the invention as a servo control of the servo valve. Therefore it is possible to control the servo valve without amplification of the low power signal from the microcomputer by means of small electromagnets.

Several different embodiments of the invention are possible within the scope of the invention. The valves and springs may for instance be arranged according to Figure 1 or Figure 4. Cleaning of the small conduits 16, 17 can be obtained by locating a pin in the cylinder, having approximatively the same length as the cylinder chamber 2, and of say 0.5 mm diameter for a 0.63 mm conduit. The pin will be stationary, while the piston moves axially, so the conduits will be automatically cleaned from any contaminations.

## Claims

1. A pneumatic servo valve operable by means of electric signals to distribute compressed air to or from a double acting servo motor (28, 29) and comprising
a body (1) defining a cylinder chamber (2) with coaxial bores (5', 6') at each end of said chamber (2); a piston (3) slidably arranged in the cylinder chamber (2) and provided with projecting portions (5, 6) which are rigidly connected to and axially project from each side of the piston (3) and slide in the respective bores (5', 6');

an axially extending channel (7) through the piston (3) and the projecting portions (5, 6);

a circumferential groove (4) in said piston (3);

a radially extending bore (8) connecting said channel (7) and said groove (4);

an inlet port (9) open to said groove (4) for introducing the compressed air into the servo valve;

and outlet channels (14, 15) for connection with said servo motor (28, 29);

characterized in that the distribution of compressed air to or from the servo motor (28, 29) is controlled by two spring biased double seat valves (10, 11) having cone-like sealing surfaces at each end facing in the same direction, said double seat valves (10, 11) being coaxial with said projecting portions (5, 6) and so arranged that in the normal position of the servo valve the inner sealing surfaces thereof close respective ends of said channel (7) and the outer sealing surfaces are urged against bleed seats (12, 13) which are axially adjustable for adjustment of the piston (3) in a central position wherein the four sealing surfaces of said seat valves (10, 11) are in engagement with their respective seats; whereby during operation of said servo valve any movement of the piston (3) out of the normal position results in a connection of one of the outlet channels (14, 15) with the inlet port (9) and in a connection of the other outlet channel (15, 14) with a bleed port.

2. A servo valve according to claim 1, characterized in that an axial displacement of the piston from its central position, caused by different air pressures on opposite sides will remove one of the piston projections (5, 6) from the adjacent double seat valve (10,11), thereby opening the piston channel (7), allowing air pressure to flow to one side of the servo motor while the other double seat valve will be lifted from its bleed seat, so that the other side of the servo motor is decompressed simultaneously with the servo motor piston moving in one direction, and that a displacement of the piston (3) and its projections (5, 6) in the opposite direction will influence the servo motor piston to move in the above described way in the opposite direction.

3. A servo valve according to claim 1 and 2, characterized in that the cylinder (2) is so short in relation to the piston (3), that the piston cannot move further axially than is necessary for full opening of the valves (10, 11).

4. A servo valve according to claim 1 and 2, characterized in that small conduits (16, 17) are drilled from each end of the piston (3) towards the circumferential groove (4) in order to deliver compressed air to both ends of the cylinder (2).

5. A servo valve according to claim 1, 2 and 4, characterized in that channels in the valve body lead from each end of the cylinder (2) to two parallel decompression nozzles (18, 19), which are closed by spring biased flappers (20, 21), whereby the pressure on both sides of the piston (3) can be controlled by lifting either of the flappers from its respective nozzle by means of an electromagnet (24, 25) designed for receiving electric signals from a microcomputer.

**Patentansprüche**

1. Durch ein elektrisches Signal betätigbares pneumatisches Servoventil zum verteilen von Druckluft zu oder von einem doppelt wirkenden Servomotor (28,29), mit

einem körper (1), der eine zylindrische Kammer (2) mit an beiden Enden angeordneten Bohrungen (5',6') bildet,

einen Kolben (3) der gleitend in der Kammer (2) aufgenommen und mit zwei vorstehenden Abschnitten (5,6) ausgestattet ist, die, axial abstehend, fest mit jeder Seite des Kolbens (3) verbunden sind und in den jeweiligen Bohrungen (5',6') gleiten,

einem sich axial durch den Kolben (3) und die Abschnitte (5,6) erstreckenden Kanal (7),

einer Umfangsnut (4) in dem Kolben (3),

einer sich radial erstreckenden Bohrung (8), die den Kanal (7) und die Nut (4) verbindet,

einem Eingang (9), der zur Zuführung von Druckluft in das Servoventil offen ist, und

Ausgangskanälen (14,15) für die Verbindung mit dem Servomotor (28,29),

dadurch gekennzeichnet, daß die verteilung der Druckluft zu dem oder von dem Servomotor (28,29) von zwei federbelasteten Doppel-Sitz-Ventilen (10,11) mit kegelartigen Dictflächen an jedem in die gleiche Richtung gewandten Ende gesteuert wird, wobei die Doppel-Sitz-Ventile koaxial zu dem vorstehenden Abschnitt (5,6) sind und so angeordnet sind, daß in der Normalstellung des Servoventils die inneren Dichtflächen die jeweiligen Enden des Kanals (7) schließen und die äußeren Dichtflächen gegen Abströmsitze (12,13) anliegen, die zum Einstellen des kolbens in eine Mittelposition axial einrichtbar sind, in der sich die vier Dichtflächen der Sitzentile (10 11) in ihren zugeordneten Sitzen befinden, und wobei während des Betriebs des Servoventils jede Bewegung des Kolbens (3) aus der Normalposition heraus zu einer Verbindung des Ausgangskanals (14,15) mit dem Eingang (9) und einer verbindung des anderen Ausgangskanals (15-14) mit einer Abströmöffnung führt.

2. Servoventil nach Anspruch 1, dadurch gekennzeichnet, daß eine axiale Verschiebung des Kolbens aus seiner Mittelposition, bewirkt durch Druckunterschiede auf entgegengesetzten Seiten, einen der Kolbenabschnitte (5,6) aus dem benachbarten Doppel-Sitz-ventil (10,11) entfernt, dabei den kolbenkanal (7) öffnet und dem Luftdruck erlaubt, zu einer Seite des Servomotors zu strömen, während das andere Doppel-Sitz-Ventil von seinem Abströmsitz angehoben wird, so daß die andere Seite des Servomotors dekomprimiert wird mit gleichzeitigem Bewegen des Servomotorkolbens in einer Richtung, und daß eine verschiebung des Kolbens (3) und seiner Abschnitte (5,6) in die entgegengesetzte Richtung den Servomotorkolben beeinflußt, in der oben beschriebe nen Weise in die entgegensesetzte Richtung zu fahren.

3. Servoventil nach Anspruch 1 und 2, dadurch gekennzeichnet, daß der Zylinder (2) im Verhältnis zum Kolben (3) so kurz ist, daß sich der Kolben axial nicht weiter bewegen kann, als es für das volle Öffnen des Ventils (10,11) erforderlich ist.

4. Servoventil nach Anspruch 1 oder 2, dadurch gekennzeichnet, daß Leitungen (16,17) geringer Abmessung von jedem Ende des Kolbens (3) zur Umfangsnut (4) gebohrt sind, um Druckluft beiden Enden des Zylinders (2) anzuliefern.

5. Servoventil nach Anspruch I,2 und 4, dadurch gekennzeichnet, daß Kanäle in dem Ventilkörper von jedem Ende des Zylinders (2) zu zwei parallelen Dekompressionsdüsen (18,19) führen, welche von federbeaufschlagten Klappen (20,21) geschlossen sind, wobei der Druck auf beiden Seiten des Kolbens (3) durch Anheben jeder der Klappen von ihren jeweiligen Düsen mittels eines für den Empfang von elektrischen Signalen eines Mikrocomputers ausgelegten Elektromagnets (24) gesteuert werden kann.

**Revendications**

1. Servovalve pneumatique pouvant être commandée grâce à des signaux électriques pour distribuer de l'air comprimé vers ou depuis un servomoteur à double effet (28, 29), et comprenant un corps (1) formant une chambre cylindrique (2) à passages coaxiaux (5', 6') prévus à chaque extrémité de cette chambre (2), un piston (3) monté à glissement dans la chambre cylindrique (2) et comportant des parties saillantes (5, 6) qui sont rigidement reliées à chaque face du piston (3) et se présentent en saillie axiale depuis ces faces, et glissent dans des passages correspondants (5', 6'), un canal axial (7) traversant le piston (3) et les parties saillantes (5, 6), une rainure circonférentielle (4) prévue dans le piston susdit (3), un passage radial (8) reliant ce canal (7) et la rainure susdite (4), un orifice d'admission (9) s'ouvrant dans la rainure (4) pour l'introduction de l'air comprimé dans la servovalve, et des canaux de sortie (14, 15) destinés à la connexion avec le servomoteur susdit (28, 29), caractérisée en ce que la distribution d'air comprimé vers et depuis le servomoteur (28, 29) est réglée par deux soupapes à double siège (10, 11) sollicitées par ressort comportant des surfaces d'obturation d'allure conique, prévues à chaque extrémité et orientées dans le même sens, ces soupapes à double siège (10, 11) étant coaxiales aux parties saillantes susdites (5, 6) et montées de telle sorte que, dans la position normale de la servovalve, les surfaces d'obturation internes de ces soupapes ferment les extrémités correspondantes du canal (7), tandis que les surfaces d'obturation extérieures sont poussées contre des sièges de décharge (12, 13) qui sont réglables axialement pour le réglage du piston (3) en position centrale, dans laquelle les quatre surfaces d'obturation de ces soupapes à double siège (10, 11) sont en contact avec leurs sièges respectifs, de sorte que, durant le fonctionnement de cette servovalve, tout mouvement quelconque du piston (3) s'écartant de la position normale a pour résultat une connexion de l'un des canaux de sortie (14, 15) avec le passage d'entrée (9) et une connexion de l'autre canal de sortie (15, 14) avec un passage de décharge.

2. Servovalve suivant la revendication 1, caractérisée en ce qu'un déplacement axial du piston depuis sa position centrale, provoqué par des pressions d'air différentes s'exerçant sur ses côtés opposés provoquera l'écartement de l'une des saillies de piston (5, 6) depuis la soupape à double siège adjacente (10, 11), ce qui ouvre ainsi le canal de piston (7), en permettant une circulation d'air sous pression vers un côté du servomoteur, tandis que l'autre soupape à double siège sera soulevée de son siège de décharge, de sorte que l'autre côté du servomoteur est décomprimé simultanément tandis que le piston du servomoteur se déplace dans une direction, et qu'un déplacement du piston (3) et de ses saillies (5, 6) dans le sens opposé influencera le piston de servomoteur pour qu'il se déplace de la manière décrite ci-dessus dans le sens opposé.

3. Servovalve suivant les revendications 1 et 2, caractérisée en ce que le cylindre (2) est suffisamment court, par rapport au piston (3), pour que ce piston ne puisse pas se déplacer plus fortement axialement que ce qui est nécessaire pour la pleine ouverture des soupapes (10, 11).

4. Servovalve suivant les revendications 1 et 2, caractérisée en ce que de petits passages (16, 17) sont forés depuis chaque extrémité du piston (3) vers la rainure circonférentielle (4) pour débiter de l'air comprimé vers les deux extrémités du cylindre (2).

5. Servovalve suivant les revendications 1, 2 et 4, caractérisée en ce que des canaux prévus dans le corps de la servovalve partent de chaque extrémité du cylindre (2) vers deux ajutages de décompression parallèles (18, 19), qui sont fermés par des palettes (20, 21) sollicitées par ressort, de sorte que la pression régnant des deux côtés du piston (3) peut être réglée en soulevant l'une ou l'autre des palettes depuis son ajutage correspondant grâce à un électroaimant (24, 25) conçu pour recevoir des signaux électriques d'un micro-ordinateur.

FIG. 1

# FIG. 2

# FIG. 3

# FIG. 4